# FASCICULE DE BREVET EUROPEEN

(11) **EP 3 527 418 B1**
(45) Date de publication et mention de la délivrance du brevet: **06.05.2026**
(21) Numéro de dépôt: 19157514.1
(22) Date de dépôt: 15.02.2019
(51) Int. Cl.: B60L 5/08, B60L 5/20

(54) **ARCHET POUR CAPTER UN COURANT ÉLECTRIQUE COMPRENANT AU MOINS UN AIMANT PERMANENT**
BOGEN ZUR AUFNAHME EINES ELEKTRISCHEN STROMS, DER MINDESTENS EINEN DAUERMAGNETEN UMFASST
BOW FOR CAPTURING AN ELECTRIC CURRENT COMPRISING AT LEAST ONE PERMANENT MAGNET

(30) Priorité: 15.02.2018 FR 1851278
(43) Date de publication de la demande: 21.08.2019
(73) Titulaire: ALSTOM Holdings, 93400 Saint-Ouen-sur-Seine (FR)
(72) Inventeur: CREUNET, Christophe, 67000 STRASBOURG (FR); ANQUETIL, Fabrice, 67500 HAGUENAU (FR)
(74) Mandataire: Plasseraud IP

(56) Documents cités:
- EP-A1- 2 998 148
- EP-A1- 3 501 877
- FR-A1- 2 831 114
- GB-A- 560 769
- JP-A- H0 568 303

## Description

La présente invention concerne un archet pour capter un courant électrique par frottement sur un fil de caténaire, l'archet comprenant une bande de frottement montée le long d'une barre de support.

Un tel archet est notamment utilisé pour recevoir une alimentation électrique d'un fil de caténaire afin de fournir de l'énergie électrique à un véhicule ferroviaire.

JPH0568303 divulgue un archet muni d'un aimant disposé pour générer une force d'attraction entre l'archet et le fil de caténaire. En outre, FR2831114 A1 divulgue un archet muni de plusieurs aimants permanents ou électroaimants.

Durant la période de givre, de nombreux archets sont détériorés du fait de l'apparition d'arcs électriques lorsque l'archet passe sur un fil de caténaire givré.

Le givre présent sur le fil de caténaire dégrade le contact archet / fil de caténaire, ce qui engendre des arcs électriques. Ces arcs électriques à répétition ou entretenus engendrent des détériorations sur l'archet par échauffement excessif de la structure de l'archet.

Un des buts de l'invention est de fournir un archet qui soit mieux protégé lorsque le pantographe passe sur un fil de caténaire givré.

A cet effet, l'invention a pour objet un archet selon la revendication 1.

Des caractéristiques optionnelles sont définies aux revendications 2 à 6.

L'invention a également pour objet un pantographe selon la revendication 7.

D'autres caractéristiques et avantages de l'invention apparaîtront à la lecture de la description qui va suivre, donnée uniquement à titre d'exemple non limitatif et faite en se référant aux dessins annexés, dans lesquels :
- la Figure 1 est une vue schématique d'un véhicule ferroviaire comportant un archet,
- la Figure 2 est une vue de face de l'archet, et
- la Figure 3 est une vue en coupe transversale de l'archet.

Par la suite, le mot « longitudinal » désigne une direction dans laquelle l'archet, qui est allongé, présente sa dimension maximale, et le mot « transversal » désigne une direction perpendiculaire à la direction longitudinale. Le fil de caténaire s'étend sensiblement suivant une direction transversale.

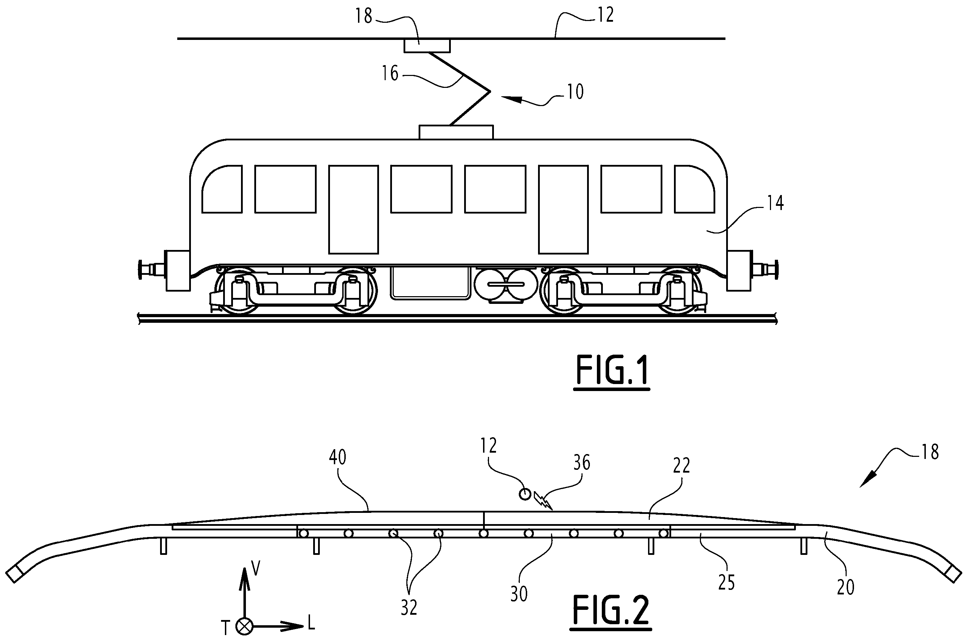

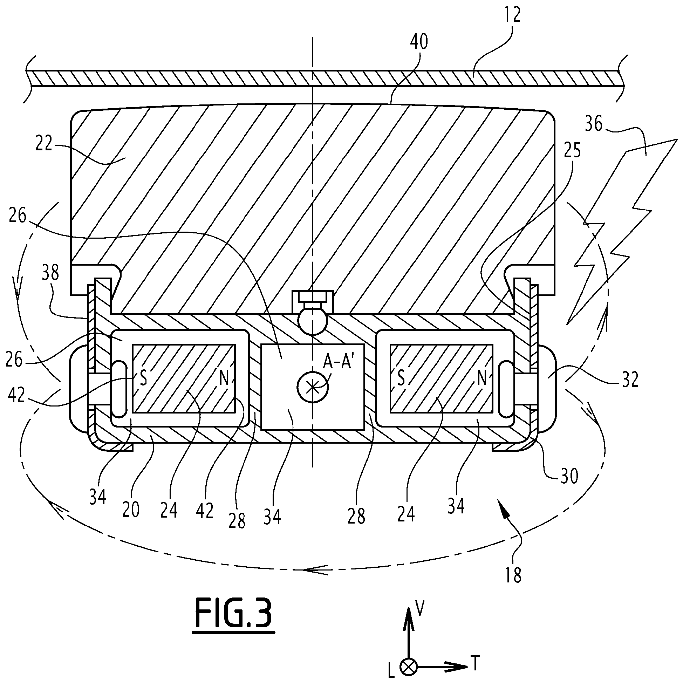

Sur les Figures 2 et 3, on a représenté un repère orthogonal comprenant un axe vertical V dirigé du bas vers le haut, un axe longitudinal L et un axe transversal T.

En référence à la Figure 1, le pantographe 10 est destiné à recevoir une alimentation électrique d'au moins un fil de caténaire 12, et à fournir l'alimentation électrique à un véhicule ferroviaire 14.

Le pantographe 10 comporte un bras 16 et un archet 18 porté par le bras 16, l'archet 18 étant configuré pour capter un courant électrique par frottement sur le fil de caténaire 12.

De manière classique, le bras 16 est par exemple pivotant et/ou articulé pour maintenir l'archet 18 en contact avec le fil de caténaire 12 lors du déplacement du pantographe 10 le long du fil de caténaire 12.

En référence aux Figures 2 et 3, l'archet 18 comporte une barre de support 20, une bande de frottement 22 montée le long de la barre de support 20, et au moins un aiment permanent 24.

La barre de support 20 est par exemple métallique. Dans un exemple de réalisation, la barre de support 20 est réalisée en aluminium ou en alliage d'aluminium.

La barre de support 20 est allongée et s'étend suivant une direction d'extension longitudinale.

La barre de support 20 est prolongé à chacune de ses extrémités par des extensions arquées ou « cornes », recourbées vers le bas.

Avantageusement, la barre de support 20 est profilée. Ainsi, elle présente une section transversale constante le long de sa direction d'extension. La barre de support 20 présente par exemple une section transversale de forme générale rectangulaire.

La barre de support 20 possède une face supérieure sur laquelle est disposée la bande de frottement 22. La barre de support 20 possède également deux surfaces latérales 25 s'étendant suivant la direction longitudinale.

La barre de support 20 est par exemple creuse et possède au moins un logement 26 défini à l'intérieur de la barre de support 20.

La barre de support 20 est ici tubulaire, chaque logement 26 s'étendant le long de la barre de support 20.

La barre de support 20 comprend ici trois logements 26 s'étendant parallèlement à l'intérieur de la barre de support 20 suivant la direction d'extension, les trois logements 26 étant séparés par deux cloisons 28 internes.

Les trois logements 26 comprennent deux logements 26 latéraux et un logement 26 central. Chaque logement 26 latéral est adjacent à une surface latérale 25 respective. Le logement 26 central est situé transversalement entre les deux logements 26 latéraux.

En variante, la barre de support 20 comprend un seul logement 26, exactement deux logements 26 ou plus de trois logements 26.

L'archet 18 comprend au moins une plaque de protection 30, chaque plaque de protection 30 étant fixée sur une des surfaces latérales 25 de la barre de support 20.

De préférence, chaque surface latérale 25 est munie d'au moins une plaque de protection 30.

Chaque plaque de protection 30 est fixée sur une surface latérale 25 de la barre de support 20, par exemple par collage, vissage et/ou rivetage. Chaque plaque de protection 30 est ici fixée sur une surface latérale 25 par rivetage à l'aide de plusieurs rivets de fixation 32.

Les plaques de protection 30 s'étendent suivant la direction d'extension. Elles sont configurées pour protéger la barre de support 20 contre des arcs électriques 36 se propageant du fil de caténaire 12 et venant frapper les surfaces latérales 25 de la barre de support 20.

Les plaques de protection 30 sont par exemple réalisées en un matériau présentant une température de fusion supérieure à celle du matériau de la barre de support 20. Les plaques de protection 30 sont par exemple réalisées en acier.

Avantageusement, les plaques de protection 30 sont munies d'un revêtement thermiquement résistant 38 afin d'améliorer la résistance des plaques de protection 30 contre les arcs électriques 36. Le revêtement thermiquement résistant 38 est réalisé par exemple en céramique.

La bande de frottement 22 est destinée à être en contact avec le fil de caténaire 12 via une surface de contact 40 supérieure de la bande de frottement 22.

La bande de frottement 22 est de préférence réalisée en carbone ou en graphite. Ainsi, la bande de frottement 22 présente un coefficient de frottement faible et une bonne conductivité électrique.

La surface de contact 40 est sensiblement plate et est configurée pour coopérer avec le fil de caténaire 12.

Chaque aimant permanent 24 est disposé de manière à générer un champ magnétique propre à dévier un arc électrique provenant du fil de caténaire 12, en le déviant à l'écart de la barre de support 20.

Chaque aimant permanent 24 est par exemple bipolaire et orienté de sorte que ses pôles magnétiques 42 (pôle nord et pôle sud) sont orientés suivant une direction d'aimantation sensiblement parallèle au fil de caténaire 12 en cours de fonctionnement.

La direction d'aimantation est sensiblement perpendiculaire à la direction d'extension de la barre de support 20 et à la normale à la surface de contact 40 de la bande de frottement 22.

Ainsi, le champ magnétique créé par chaque aimant permanent 24 exerce une force de Lorentz sur un arc électrique 36 partant du fil de caténaire 12 vers la barre de support 20 qui dévie cet arc électrique 36 à l'écart de la barre de support 20.

Sur la Figure 3 sont représentées en traits mixtes les lignes de champs magnétiques générées par les aimants permanents 24.

Chaque aimant permanent 24 est reçu à l'intérieur de la barre de support 20. Chaque aimant permanent 24 est reçu dans un logement 26 défini à l'intérieur de la barre de support 20 creuse.

L'archet 18 comprend ici deux aimants permanents 24 dont les pôles magnétiques 42 sont orientés dans le même sens.

De préférence, chaque aimant permanent 24 est adjacent à une surface latérale 25 respective de la barre de support 20. Ainsi, chaque aimant permanent 24 peut générer un champ magnétique à proximité de la surface latérale 25 qui soit d'intensité suffisante pour dévier un arc électrique 36 provenant du fil de caténaire 12.

Lorsque la barre de support 20 comprend plusieurs logements 26, chaque aimant permanent 24 est par exemple reçu dans un logement 26 respectif défini à l'intérieur de la barre de support 20.

Chaque aimant permanent 24 est ici reçu dans un logement 26 latéral respectif.

Selon un exemple de réalisation, les aimants permanents 24 sont au nombre de deux. Les deux aimants permanents 24 sont disposés de part et d'autre de manière symétrique par rapport à un axe symétrique longitudinal A-A' de l'archet 18.

Chaque aimant permanent 24 et allongé et s'étend le long de la barre de support 20 (suivant la direction d'extension longitudinale) de manière à protéger la barre de support 20 sur sa longueur.

Grâce à l'invention décrite ci-dessus, la barre de support 20 et la plaque de protection 30 sont mieux protégées lorsque les arcs électriques 36 sont générés à partir du fil de caténaire 12.

De plus, la configuration de la barre de support 20 selon l'invention est simple et facile à appliquer sur le pantographe 10, y compris en rattrapage (ou *« retrofit »* en anglais) d'un pantographe 10 existant, ce qui évite la nécessité à concevoir de nouvelles configurations compliquées tout en assurant l'efficacité de déviation des arcs électriques 36.

Lorsque la barre de support 20 comprend plusieurs logements 26, chaque aimant permanent 24 est par exemple reçu dans un logement 26 respectif défini à l'intérieur de la barre de support 20.

Chaque aimant permanent 24 est ici reçu dans un logement 26 latéral respectif.

Selon un exemple de réalisation, les aimants permanents 24 sont au nombre de deux. Les deux aimants permanents 24 sont disposés de part et d'autre de manière symétrique par rapport à un axe symétrique longitudinal A-A' de l'archet 18.

Chaque aimant permanent 24 et allongé et s'étend le long de la barre de support 20 (suivant la direction d'extension longitudinale) de manière à protéger la barre de support 20 sur sa longueur.

Grâce à l'invention décrite ci-dessus, la barre de support 20 et la plaque de protection 30 sont mieux protégées lorsque les arcs électriques 36 sont générés à partir du fil de caténaire 12.

De plus, la configuration de la barre de support 20 selon l'invention est simple et facile à appliquer sur le pantographe 10, y compris en rattrapage (ou *« retrofit »* en anglais) d'un pantographe 10 existant, ce qui évite la nécessité à concevoir de nouvelles configurations compliquées tout en assurant l'efficacité de déviation des arcs électriques 36.

## Revendications

1. Archet (18) pour capter un courant électrique par frottement sur un fil de caténaire (12), l'archet (18) comprenant une bande de frottement (22) montée la long d'une barre de support (20) et deux aimants permanents (24) fixés à la barre de support (20) en étant orientés de manière à dévier un arc électrique (36) se propageant du fil de caténaire (12) vers la barre de support (20) à l'écart de cette dernière, caractérisé en chaque aimant permanent (24) étant orienté de façon que ses pôles magnétiques (42) soient alignés suivant une direction d'aimantation sensiblement parallèle au fil de caténaire (12), en cours de fonctionnement,
et en l'archet (18) comprenant au moins une plaque de protection (30), chaque plaque de protection (30) recouvrant une surface latérale (25) parmi deux surfaces latérales (25) opposées de la barre de support (20).

2. Archet (18) selon la revendication 1, dans lequel la barre de support (20) est creuse, chaque aimant permanent (24) étant disposé à l'intérieur de la barre de support (20).

3. Archet (18) selon l'une quelconque des revendications précédentes, dans lequel chaque aimant permanent (24) est allongé suivant la longueur de la barre de support (20).

4. Archet (18) selon l'une quelconque des revendications précédentes, dans lequel chaque aimant permanent (24) est adjacent à une surface latérale (25) respective parmi deux surfaces latérales (25) opposées de la barre de support (20).

5. Archet (18) selon l'une quelconque des revendications précédentes, comprenant deux aimants permanents (24) dont les pôles magnétiques sont orientés suivant la même direction d'aimantation et dans le même sens.

6. Archet (18) selon la revendication 1, dans lequel chaque plaque de protection (30) est réalisée en acier.

7. Pantographe (10) pour le captage d'électricité à partir d'un fil de caténaire (12), comprenant au moins un archet (18) selon l'une quelconque des revendications précédentes.

## Patentansprüche

1. Bügel (18) zur Aufnahme eines elektrischen Stroms durch Reibung an einem Fahrleitungsdraht (12), wobei der Bügel (18) einen Reibungsstreifen (22) umfasst, der entlang einer Trägerstange (20) montiert ist, und zwei Dauermagnete (24), die an der Trägerstange (20) befestigt sind und so ausgerichtet sind, dass ein LichtBügel (36), der sich vom Fahrleitungsdraht (12) zur Trägerstange (20) ausbreitet, von letzterer abgelenkt wird,
wobei jeder Dauermagnet (24) so ausgerichtet ist, dass seine magnetischen Pole (42) entlang einer Magnetisierungsrichtung im Wesentlichen parallel zum Fahrleitungsdraht (12) während des Betriebs ausgerichtet sind, und
wobei der Bügel (18) mindestens eine Schutzplatte (30) umfasst, wobei jede Schutzplatte (30) eine Seitenfläche (25) unter zwei gegenüberliegenden Seitenflächen (25) der Trägerstange (20) abdeckt.

2. Bügel (18) gemäß Anspruch 1, wobei die Trägerstange (20) hohl ist und jeder Dauermagnet (24) im Inneren der Trägerstange (20) angeordnet ist.

3. Bügel (18) gemäß einem der vorhergehenden Ansprüche, wobei jeder Dauermagnet (24) sich entlang der Länge der Trägerstange (20) erstreckt.

4. Bügel (18) gemäß einem der vorhergehenden Ansprüche, wobei jeder Dauermagnet (24) jeweils einer Seitenfläche (25) unter zwei gegenüberliegenden Seitenflächen (25) der Trägerstange (20) benachbart ist.

5. Bügel (18) gemäß einem der vorhergehenden Ansprüche, umfassend zwei Dauermagnete (24), deren magnetische Pole in derselben Magnetisierungsrichtung und im gleichen Sinn ausgerichtet sind.

6. Bügel (18) gemäß Anspruch 1, wobei jede Schutzplatte (30) aus Stahl hergestellt ist.

7. Pantograph (10) zur Aufnahme von Elektrizität von einem Fahrleitungsdraht (12), umfassend mindestens einen Bügel (18) gemäß einem der vorhergehenden Ansprüche.

## Claims

1. Bow (18) for capturing an electric current by friction on a catenary wire (12), the bow (18) comprising a friction strip (22) mounted along a support bar (20) and two permanent magnets (24) attached to the support bar (20) and oriented so as to deflect an electric arc (36) propagating from the catenary wire (12) towards the support bar (20) away from the latter, **characterised in that** each permanent magnet (24) is oriented so that its magnetic poles (42) are aligned in a direction of magnetisation substantially parallel to the catenary wire (12), during operation, and **in that** the bow (18) comprises at least one protection plate (30), each protection plate (30) covering one lateral surface (25) of two opposite lateral surfaces (25) of the support bar (20).

2. Bow (18) according to Claim 1, wherein the support bar (20) is hollow, each permanent magnet (24) being disposed inside the support bar (20).

3. Bow (18) according to any one of the preceding claims, wherein each permanent magnet (24) is elongated along the length of the support bar (20).

4. Bow (18) according to any one of the preceding claims, wherein each permanent magnet (24) is adjacent to a respective lateral surface (25) out of two opposite lateral surfaces (25) of the support bar (20).

5. Bow (18) according to any one of the preceding claims, comprising two permanent magnets (24) whose magnetic poles are oriented in the same magnetisation direction and in the same direction.

6. Bow (18) according to Claim 1, wherein each protection plate (30) is made of steel.

7. Pantograph (10) for capturing electricity from a catenary wire (12), comprising at least one bow (18) according to any one of the preceding claims.
